# EUROPÄISCHE PATENTSCHRIFT

(11) **EP 1 201 671 B1**
(45) Veröffentlichungstag und Bekanntmachung des Hinweises auf die Patenterteilung: **12.11.2003**
(21) Anmeldenummer: 01118869.5
(22) Anmeldetag: 16.08.2001
(51) Int. Cl.: C07F 7/14, C07F 7/08, C07F 7/18

(54) **Herstellung von Organosilanen**
Process for preparing organosilanes
Procédé de préparation d'organosilanes

(30) Priorität: 26.10.2000 DE 10053037
(43) Veröffentlichungstag der Anmeldung: 02.05.2002
(73) Patentinhaber: Consortium für elektrochemische Industrie GmbH, 81379 München (DE)
(72) Erfinder: Bauer, Andreas, Dr., 81371 München (DE); Schäfer, Oliver, Dr., 81377 München (DE); Kriegbaum, Markus, 82050 Sauerlach (DE); Brader, Leonhard, 83730 Fischbachau (DE); Pachaly, Bernd, Dr., 84561 Mehring-Öd (DE); Frey, Volker, Dr., 84489 Burghausen (DE)
(74) Vertreter: Fritz, Helmut, Dr.

(56) Entgegenhaltungen:
- EP-A- 0 709 392
- EP-A- 1 156 052
- US-A- 4 549 018
- US-A- 4 658 050

## Beschreibung

Die Erfindung betrifft ein Verfahren zur Herstellung von Organosilanen über Hydrosilylierung in Gegenwart von Iridiumverbindung als Katalysator und freiem Dien als Cokatalysator.

Substituierte Alkylsilane sind von enormen wirtschaftlichem Interesse für eine Vielzahl von Bereichen. Sie werden eingesetzt z. B. als Haftvermittler oder als Vernetzer.

Die Platin- bzw. Rhodium-katalysierte Hydrosilylierung von ungesättigten Verbindungen ist bereits vielfach untersucht worden. Die Produktausbeuten sind oft mit 20 bis 45% sehr niedrig, was auf erhebliche Nebenreaktionen zurückzuführen ist.

Iridium-Katalysatoren mit Dienliganden werden gemäss US-A-4658050 bei der Hydrosilylierung von Allylverbindungen mit Alkoxy-substituierten Silanen verwendet. JP-A-07126271 beschreibt die Hydrosilylierung von Allylhalogeniden mit Chlorodimethylsilan in Anwesenheit von Iridium-Katalysatoren mit Dienliganden. Nachteile dieser Verfahren sind entweder mäßige Ausbeuten, eine unwirtschaftlich hohe Katalysator-Konzentration und/oder eine sehr kurze Lebensdauer des Katalysators.

Die Aufgabe war es, ein Katalysator-System mit langer Lebensdauer zu entwickeln, welches hohe Produktausbeuten und - reinheit bei sehr geringen Katalysatormengen gewährleistet und zudem sowohl eine kontinuierliche als auch diskontinuierliche Reaktionsführung erlaubt.

Gegenstand der Erfindung ist ein Verfahren zur Herstellung von Silan der allgemeinen Formel I

R⁶R⁵CH-R⁴CH-SiR¹R²R³ (I),

bei dem Silan der allgemeinen Formel II

HSiR¹R²R³ (II),

mit Alken der allgemeinen Formel III

R⁶R⁵CH=CHR⁴ (III),

in Gegenwart von Iridiumverbindung der allgemeinen Formel IV als Katalysator

[(Dien)IrCl]₂ (IV),

und freiem **Dien** als Cokatalysator umgesetzt wird, wobei
- **R**^{**1**}**, R**^{**2**}**, R**^{**3**}: einen einwertigen Si-C gebundenen, gegebenenfalls halogensubstituierten C₁-C₁₈-Kohlenwasserstoff-, Chlor-, oder C₁-C₁₈-Alkoxyrest,
- **R**^{**4**}**, R**^{**5**}**, R**^{**6**}: ein Wasserstoffatom, einen einwertigen gegebenenfalls mit F, Cl, OR, CN oder NCO substituierten C₁-C₁₈-Kohlenwasserstoff-, Chlor-, Fluoroder C₁-C₁₈-Alkoxyrest, wobei jeweils 2 Reste von **R**^{**4**}**, R**^{**5**}**, R**^{**6**} gemeinsam mit den Kohlenstoffatomen, an die sie gebunden sind, einen cyclischen Rest bilden können,
- **R**: ein Wasserstoffatom, einen einwertigen C₁-C₁₈-Kohlenwasserstoffrest und
- **Dien**: eine gegebenenfalls mit F, Cl, OR, CN oder NCO substituierte C₄-C₅₀-Kohlenwasserstoffverbindung, die mindestens zwei ethylenische C=C Doppelbindungen aufweist,
bedeuten, wobei Dien als Cokatalysator kontinuierlich nachdosiert wird.

Bei dem Verfahren werden die Zielprodukte der allgemeinen Formel I beim Einsatz von sehr geringen Katalysatormengen in Ausbeuten von mindestens 95 % bis zu 98 % erhalten. Je nach Anwendungsgebiet kann deshalb auf eine destillative Aufarbeitung verzichtet werden.

C₁-C₁₈-Kohlenwasserstoffreste **R**^{**1**}**, R**^{**2**}**, R**^{**3**} bedeuten vorzugsweise Alkyl-, Alkenyl-, Cycloalkyl- oder Arylreste. Vorzugsweise weisen **R**^{**1**}**, R**^{**2**}**, R**^{**3**} höchstens 10, insbesondere höchstens 6 Kohlenstoffatome auf. Vorzugsweise sind **R**^{**1**}**, R**^{**2**}**, R**^{**3**} geradkettige oder verzweigte C₁-C₆-Alkylreste oder C₁-C₆-Alkoxyreste. Bevorzugte Halogensubstituenten sind Fluor und Chlor. Besonders bevorzugt als **R**^{**1**}**, R**^{**2**}**, R**^{**3**} sind die Reste Methyl, Ethyl, Methoxy, Ethoxy, Chlor, Phenyl und Vinyl.

Kohlenwasserstoffreste **R**^{**4**}**, R**^{**5**}**, R**^{**6**} bedeuten vorzugsweise Alkyl-, Alkenyl-, Cycloalkyl- oder Arylreste. Vorzugsweise ist höchstens einer von **R**^{**4**}**, R**^{**5**}**, R**^{**6**} ein Alkoxyrest. Vorzugsweise weisen **R**^{**5**}**, R**^{**6**} höchstens 10, insbesondere höchstens 6 Kohlenstoffatome auf. Vorzugsweise weisen **R**^{**5**}**, R**^{**6**} höchstens 10, insbesondere höchstens 6 Kohlenstoffatome auf. Vorzugsweise sind **R**^{**5**}**, R**^{**6**} geradkettige oder verzweigte C₁-C₆-Alkylreste oder C₁-C₆-Alkoxyreste. Besonders bevorzugt als **R**^{**5**}**, R**^{**6**} sind die Reste Wasserstoff, Methyl, Ethyl, Chlor und Phenyl.

Vorzugsweise weist Kohlenwasserstoffrest **R**^{**4**} höchstens 6, insbesondere höchstens 2 Kohlenstoffatome auf. Besonders bevorzugt als **R**^{**4**} sind die Reste Wasserstoff, Methyl, Ethyl.

Vorzugsweise weist Kohlenwasserstoffrest **R** höchstens 6, insbesondere höchstens 2 Kohlenstoffatome auf.

Die als **Dien** eingesetzten Kohlenwasserstoffverbindungen können neben den die ethylenischen C=C Doppelbindungen aufweisenden Moleküleinheiten noch Alkyl-, Cycloalkyl- oder Aryleinheiten aufweisen. Vorzugsweise weisen die **Diene** 6 bis 12 Kohlenstoffatome auf. Bevorzugt sind mono- oder bicyclische **Diene**. Bevorzugte Beispiele für **Diene** sind Butadien, 1,3-Hexadien, 1,4-Hexadien, 1,5-Hexadien, Isopren, 1,3-Cyclohexadien, 1,3-Cyclooctadien, 1,4-Cyclooctadien, 1,5-Cyclooctadien und Norbornadien.

Das **Dien** im Katalysator der allgemeinen Formel IV und das freie als Cokatalysator dienende **Dien** können gleich oder unterschiedlich sein. Vorzugsweise sind beide **Diene** gleich.

In einem besonders bevorzugten Fall werden als Katalysator der allgemeinen Formel IV [(Cycloocta-1c,5c-dien)IrCl]₂ und als Cokatalysator 1,5-Cyclooctadien verwendet.

Die Silankomponente der allgemeinen Formel II wird bevorzugt im Überschuß von 0,01 bis 100 Mol-% II, besonders bevorzugt 0,1 bis 10 Mol-%, bezogen auf das Alken der allgemeinen Formel III umgesetzt. Die Iridium-Verbindung der allgemeinen Formel IV liegt vorzugsweise in einer Konzentration von 5 bis 250 ppm, insbesondere 10 bis 50 ppm, bezogen auf alle in der Reaktionsmischung vorhandenen Komponenten vor. **Dien** wird vorzugsweise in einer Konzentration von 50 bis 2500 ppm, insbesondere 50 bis 1000 ppm, bezogen auf alle in der Reaktionsmischung vorhandenen Komponenten als Cokatalysator zugesetzt.

Das Verfahren kann in Anwesenheit oder in Abwesenheit von aprotischen Lösungsmitteln durchgeführt werden. Falls aprotische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diisopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Diisopropylketon, Methylisobutylketon (MIBK); Ester, wie Ethylacetat, Butylacetat, Propylpropionat, Ethylbutyrat, Ethylisobutyrat; Schwefelkohlenstoff und Nitrobenzol, oder Gemische dieser Lösungsmittel.

Als aprotisches Lösungsmittel kann im Verfahren auch das Zielprodukt der allgemeinen Formel I eingesetzt werden. Diese Verfahrensvariante ist bevorzugt.

Beispielsweise werden die Reaktionskomponenten der allgemeinen Formel II zusammen mit Iridium-Katalysator der allgemeinen Formel IV und gegebenenfalls dem **Dien** vorgelegt und die Reaktionskomponente der allgemeinen Formel III, im Gemisch mit dem **Dien**, unter Rühren zudosiert. In einer anderen Variante wird das Zielprodukt der allgemeinen Formel I zusammen mit Katalysator der allgemeinen Formel IV und gegebenenfalls **Dien** vorgelegt und eine Mischung aus Komponenten II, III und **Dien** zudosiert. Die anzuwendende Reaktionszeit liegt bevorzugt bei 10 bis 2000 Minuten. Die Reaktion wird bevorzugt bei einer Temperatur von 0 bis 300°C, insbesondere bei 20 bis 200°C, ausgeführt. Gegebenfalls ist auch die Anwendung von erhöhtem Druck dienlich, vorzugsweise bis 100 bar.

Der Zusatz des **Diens** erlaubt es zudem, mehrere Umsetzungen ohne Nachdosieren von Katalysator vorzunehmen.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1 (Ausführungsform I)

In einem 100ml-Dreihalskolben versehen mit Intensivkühler, Innenthermometer und Tropftrichter wurden 19,2 g (0,25 mol) Allylchlorid, 0,1 g (9,2·10⁻⁴ mol) 1,5-Cyclooctadien und 3,0 mg (4,5·10⁻⁶ mol) Di-µ-chloro-bis-[(cycloocta-1c,5c-dien)-iridium(I)] vorgelegt. Bei einer Badtemperatur von 37°C wurde eine Mischung aus 23,7 g (0,25 mol) Chlorodimethylsilan und 0,1 g (9,2·10⁻⁴ mol) 1,5-Cyclooctadien über einen Zeitraum von 1,5 h so zudosiert, daß die Innentemperatur 45°C nicht überstieg. Für die Nachreaktion wurde der Ansatz eine weitere Stunde bei einer Badtemperatur von 45°C gehalten. Nach destillativer Aufarbeitung wurden 40,8 g Chloro-(3-chlorpropyl)-dimethylsilan entsprechend einer Ausbeute von 95 % bezogen auf das Silan erhalten.

### Beispiel 2 (Wiederverwendbarkeit einer Katalysatorcharge)

Analog Beispiel 1. Statt destillativer Aufarbeitung wurden 19,2 g (0,25 mol) Allylchlorid und 0,1 g (9,2·10⁻⁴ mol) 1,5-Cyclooctadien zum Ansatz gegeben und erneut eine Mischung aus 23,7 g (0,25 mol) Chlorodimethylsilan und 0,1 g (9,2·10⁻⁴ mol) 1,5-Cyclooctadien zudosiert. Die Durchführung war analog Beispiel 1. Die Gesamtausbeute nach Destillation betrug 76,2 g (89 %).

### Beispiel 3 (Nachweis der katalytischen Aktivität des Destillationsumpfes)

Zum Destillationsrückstand von Beispiel 2 wurden 19,2 g (0,25 mol) Allylchlorid und 0,1 g (9,2·10⁻⁴ mol) 1,5-Cyclooctadien gegeben und erneut eine Mischung aus 23,7 g (0,25 mol) Chlorodimethylsilan und 0,1 g (9,2·10⁻⁴ mol) 1,5-Cyclooctadien zudosiert. Die Durchführung war analog Beispiel 1. Die Ausbeute nach Destillation betrug 37,0 g (87 %).

### Beispiel 4 (Ausführungsform II)

Analog Beispiel 1. Zusätzlich wurden 10,0 g (0,06 mol) Chlor(3-chlorpropyl)-dimethylsilan als Lösungsmittel vorgelegt. Nach Destillation wurden 48,8 g Produkt erhalten. Nach Abzug der eingesetzten Menge von 10,0 g beträgt die Ausbeute 38,8 g entsprechend einer Ausbeute von 91 %.

### Beispiel 5 (Ausführungsform III)

Ansatzgröße wie in Beispiel 2. Chlor-(3-chlorpropyl)-dimethylsilan, Katalysator und 1,5-Cyclooctadien wurden vorgelegt und ein Gemisch aus Allylchlorid, Chlorodimethylsilan und 1,5-Cyclooctadien zugetropft. Nach Destillation wurden 50,1 g Produkt erhalten. Nach Abzug der eingesetzten Menge von 10,0 g beträgt die Ausbeute 40,1 g entsprechend einer Ausbeute von 94 %.

### Beispiel 6 (Vergleichsbeispiel mit einem Platin-Katalysator)

In einem 100ml-Dreihalskolben versehen mit Intensivkühler, Innenthermometer und Tropftrichter wurden 19,2 g (0,25 mol) Allylchlorid und 21,0 mg (3,1·10⁻⁵ mol, 125 ppm) Dichlorodicyclopentadien-platin(II) vorgelegt. Bei einer Badtemperatur von 37°C wurde 23,7 g (0,25 mol) Chlorodimethylsilan zudosiert. Bei 50°C wurde noch 3 h nachreagiert. Nach destillativer Aufarbeitung wurden nur 18,1 g (42 %) Chloro-(3-chlorpropyl)-dimethylsilan erhalten.

### Beispiel 7 (Vergleichsbeispiel ohne Zusatz des Cokatalysators)

Ansatz analog Beispiel 1 ohne Zugabe von 1,5-Cyclooctadien. Selbst nach 24 h Reaktionszeit konnte kein meßbarer Umsatz (NMR) ermittelt werden.

## Patentansprüche

1. Verfahren zur Herstellung von Silan der allgemeinen Formel I
R⁶R⁵CH-R⁴CH-SiR¹R²R³ (I),
bei dem Silan der allgemeinen Formel II
HSiR¹R²R³ (II),
mit Alken der allgemeinen Formel III
R⁶R⁵CH=CHR⁴ (III),
in Gegenwart von Iridiumverbindung der allgemeinen Formel IV als Katalysator
[(Dien)IrCl]₂ (IV),
und freiem **Dien** als Cokatalysator umgesetzt wird, wobei
**R**^{**1**}**, R**^{**2**}**, R**^{**3**} einen einwertigen Si-C gebundenen, gegebenenfalls halogensubstituierten C₁-C₁₈-Kohlenwasserstoff-, Chlor-, oder C₁-C₁₈-Alkoxyrest,
**R**^{**4**}**, R**^{**5**}**, R**^{**6**} ein Wasserstoffatom, einen einwertigen gegebenenfalls mit F, Cl, OR, CN oder NCO substituierten C₁-C₁₈-Kohlenwasserstoff-, Chlor-, Fluoroder C₁-C₁₈-Alkoxyrest, wobei jeweils 2 Reste von **R**^{**4**}**, R**^{**5**}**, R**^{**6**} gemeinsam mit den Kohlenstoffatomen, an die sie gebunden sind, einen cyclischen Rest bilden können,
**R** ein Wasserstoffatom, einen einwertigen C₁-C₁₈-Kohlenwasserstoffrest und
**Dien** eine gegebenenfalls mit F, Cl, OR, CN oder NCO substituierte C₄-C₅₀-Kohlenwasserstoffverbindung, die mindestens zwei ethylenische C=C Doppelbindungen aufweist,
bedeuten, wobei **Dien** als Cokatalysator kontinuierlich nachdosiert wird.

2. Verfahren nach Anspruch 1, bei dem **R**^{**1**}**, R**^{**2**}**, R**^{**3**} C₁-C₆-Alkylreste oder C₁-C₆-Alkoxyreste sind.

3. Verfahren nach Anspruch 1 oder 2, bei dem **R**^{**5**}**, R**^{**6**} C₁-C₆-Alkylreste oder C₁-C₆-Alkoxyreste.

4. Verfahren nach Anspruch 1 bis 3, bei dem **R**^{**4**} ausgewählt wird aus den Resten Wasserstoff, Methyl, Ethyl.

5. Verfahren nach Anspruch 1 bis 4, bei dem die Temperatur 0 bis 300°C beträgt.

6. Verfahren nach Anspruch 1 bis 5, bei dem erhöhter Druck bis 100 bar angewendet wird.

7. Verfahren nach Anspruch 1 bis 6, bei dem als Katalysator der allgemeinen Formel IV [(Cycloocta-1c, 5c-dien)IrCl]₂ eingesetzt wird.

8. Verfahren nach Anspruch 1 bis 7, bei dem als Cokatalysator 1,5-Cyclooctadien eingesetzt wird.

## Claims

1. Process for preparing a silane of the formula I
R⁶R⁵CH-R⁴CH-SiR¹R²R³ (I)
which comprises reacting a silane of the formula II
HSiR¹R²R³ (II),
with an alkene of the formula III
R⁶R⁵CH=CHR⁴ (III),
in the presence of an iridium compound of the formula IV as catalyst
[(diene)IrCl]₂ (IV),
and free diene as cocatalyst, where
R¹, R², R³ are each a monovalent Si-C-bonded, unsubstituted or halogen-substituted C₁-C₁₈-hydrocarbon radical, a chlorine atom or a C₁-C₁₈-alkoxy radical,
R⁴, R⁵, R⁶ are each a hydrogen atom, a monovalent C₁-C₁₈-hydrocarbon radical which may be unsubstituted or bear F, Cl, OR, CN or NCO atoms/groups as substituents, a chlorine atom, a fluorine atom or a C₁-C₁₈-alkoxy radical, where in each case 2 radicals R⁴, R⁵, R⁶ together with the carbon atoms to which they are bound may form a cyclic radical,
R is a hydrogen atom or a monovalent C₁-C₁₈-hydrocarbon radical and
diene is a C₄-C₅₀-hydrocarbon compound which may be unsubstituted or bear F, Cl, OR, CN or NCO atoms/groups as substituents and has at least two ethylenic C=C double bonds, with further diene being continuously introduced as cocatalyst.

2. Process according to Claim 1, wherein R¹, R², R³ are C₁-C₆-alkyl radicals or C₁-C₆-alkoxy radicals.

3. Process according to Claim 1 or 2, wherein R³, R⁶ are C₁-C₆-alkyl radicals or C₁-C₆-alkoxy radicals.

4. Process according to any of Claims 1 to 3, wherein R⁴ is selected from among the radicals hydrogen, methyl, ethyl.

5. Process according to any of Claims 1 to 4, wherein the temperature is from 0 to 300°C.

6. Process according to any of Claims 1 to 5, wherein superatmospheric pressure up to 100 bar is employed.

7. Process according to any of Claims 1 to 6, wherein the catalyst of the formula IV used is [(cycloocta-lc,5c-diene)IrCl]₂.

8. Process according to any of Claims 1 to 7, wherein the cocatalyst used is 1,5-cyclooctadiene.

## Revendications

1. Procédé de préparation de silane répondant à la formule générale I
R⁶R⁵CH-R⁴CH-SiR¹R²R³ (I),
dans lequel on fait réagir le silane répondant à la formule générale II
HSiR¹R²R³ (II),
avec un alcène répondant à la formule générale III
R⁶R⁵CH=CHR⁴ (III),
en présence d'un composé de l'iridium répondant à la formule générale IV, comme catalyseur
[(diène)IrCl]₂ (IV),
et un diène libre comme cocatalyseur,
R¹, R², R³ représentant un groupement hydrocarboné en C₁-C₁₈, le cas échéant substitué par un halogène, lié par une liaison Si-C et monovalent, un groupement chlore ou un groupement alcoxy en C₁-C₁₈,
R⁴, R⁵, R⁶ représentant un atome d'hydrogène, un groupement hydrocarboné en C₁-C₁₈, le cas échéant substitué par F, Cl, OR, CN ou NCO et monovalent, un groupement chlore, un groupement fluor ou un groupement alcoxy en C₁-C₁₈, 2 groupements parmi R⁴, R⁵, R⁶ pouvant, à chaque fois former, conjointement avec les atomes de carbone auxquels ils sont fixés, un groupement cyclique,
R représentant un atome d'hydrogène, un groupement hydrocarboné en C₁-C₁₈, monovalent, et
diène représentant un groupement hydrocarboné en C₄-C₅₀ le cas échéant substitué par F, Cl, OR, CN ou NCO, qui comporte au moins deux doubles liaisons C=C éthyléniques, le diène étant ensuite introduit de manière dosée, en continu, en tant que cocatalyseur.

2. Procédé selon la revendication 1, dans lequel R¹, R², R³ sont des groupements alkyle en C₁-C₆ ou des groupements alcoxy en C₁-C₆.

3. Procédé selon la revendication 1 ou 2, dans lequel R⁵, R⁶ sont des groupements alkyle en C₁-C₆ ou des groupements alcoxy en C₁-C₆.

4. Procédé selon l'une quelconque des revendications 1 à 3, dans lequel R⁴ est choisi parmi les groupements hydrogène, méthyle, éthyle.

5. Procédé selon l'une quelconque des revendications 1 à 4, dans lequel la température est de 0 à 300°C.

6. Procédé selon l'une quelconque des revendications 1 à 5, dans lequel on utilise une pression élevée pouvant aller jusqu'à 100 bars.

7. Procédé selon l'une quelconque des revendications 1 à 6, dans lequel on utilise, comme catalyseur répondant à la formule générale IV, le [(cycloocta-1c, 5c-diène)IrCl]₂.

8. Procédé selon l'une quelconque des revendications 1 à 7, dans lequel on utilise, comme cocatalyseur, le 1,5-cyclooctadiène.
